# EUROPEAN PATENT APPLICATION

(11) **EP 4 023 342 A1**
(43) Date of publication of application: **06.07.2022**
(21) Application number: 20217947.9
(22) Date of filing: 30.12.2020
(51) Int. Cl.: B05C 5/02, B01D 67/00, B05C 3/12, B05C 9/04, H01M 4/04, H01M 50/403

(54) **DOUBLE-SIDEDLY COATING A POROUS WEB WITH A DOPE USING A WEB POSITIONING ELEMENT**

(71) Applicant: MMM Innovations bv, 2160 Wommelgem (BE)
(72) Inventor: DOYEN, Willy, 2160 Wommelgem (BE)
(74) Representative: DenK iP bv

(57) **Abstract**

In a first aspect, the present invention relates to a coating apparatus (41, 42) for double-sidedly coating a porous web (10) with a dope (30), comprising: (i) a slot-die coating head (50) comprising an upper lip (51), a lower lip (52) and a slot (53) between the upper lip (51) and the lower lip (52), (ii) a doctor blade (60) arranged opposite the lower lip (52) across a reference plane (15), (iii) a slit (70) defined between the lower lip (52) and the doctor blade (60) for passing a porous web (10) therebetween, the slot (53) opening up towards the slit (70), and (iv) a web positioning element (51, 61); wherein the web positioning element (51, 61) is the upper lip (51) of the slot-die coating head (50), the upper lip (51) protruding up to the reference plane (15) so that there is an offset (d) between the upper lip (51) and the lower lip (52), or a spacing structure (61) on the doctor blade (60), the spacing structure (61) protruding up to the reference plane (15) so that there is an offset (d) between the spacing structure (61) and the doctor blade (60).

## Description

### Technical field of the invention

The present invention relates to coating apparatuses and methods for double-sidedly coating a porous web with a dope.

### Background of the invention

Ion-permeable diaphragms-also called separators-are employed in various electrochemical applications such as electrolysers, batteries and fuel cells. To support their use for long-term and in bigger dimensions, these ion-permeable diaphragms must have sufficient mechanical strength. Ion-permeable web-reinforced diaphragms have therefore been developed, in which the diaphragm is made up of a reinforcing porous web (e.g. a plain-weft-type woven fabric) coated with a dope. The current manufacturing standard therefor is based on techniques such as disclosed in EP1298740A2 and EP2296825B1.

In one embodiment of EP1298740A2, a method involves passing a dope through two opposing dies with a prescribed clearance across the path of conveyance of a porous support. The system used has a narrow clearance between the support and the die lip conveying exit ends of the support conveying exit lips from the die discharge section, and the dope supplied in a quantitative manner in the widthwise direction accumulates in a liquid pool space, allowing continuous impregnation and dispensing of the dope into the support. In this system, the thickness of the coated film can be controlled by changing the clearance between the support and the die lip conveying exit ends at the tips of the lips at the support exit end.

EP2296825B1 discloses a similar approach in which an elongated porous web is transported downwards between two impregnating heads comprising two slots (i.e. one each) which provide identical metered quantities of a dope simultaneously to both sides of said elongated porous web. A difference with EP1298740A2 is said to be that the flow rate of dope fed through the impregnating heads is controlled such that the coated wet layer thickness directly dependents upon this flow rate, rather than upon the clearance between each lower die lip and the web (or viewed alternatively: the total coating gap between the lower die lips). A meniscus is thereby formed between the end of the lower lip and the elongated porous membrane and the thickness of the provided dope layers becomes independent from said clearance.

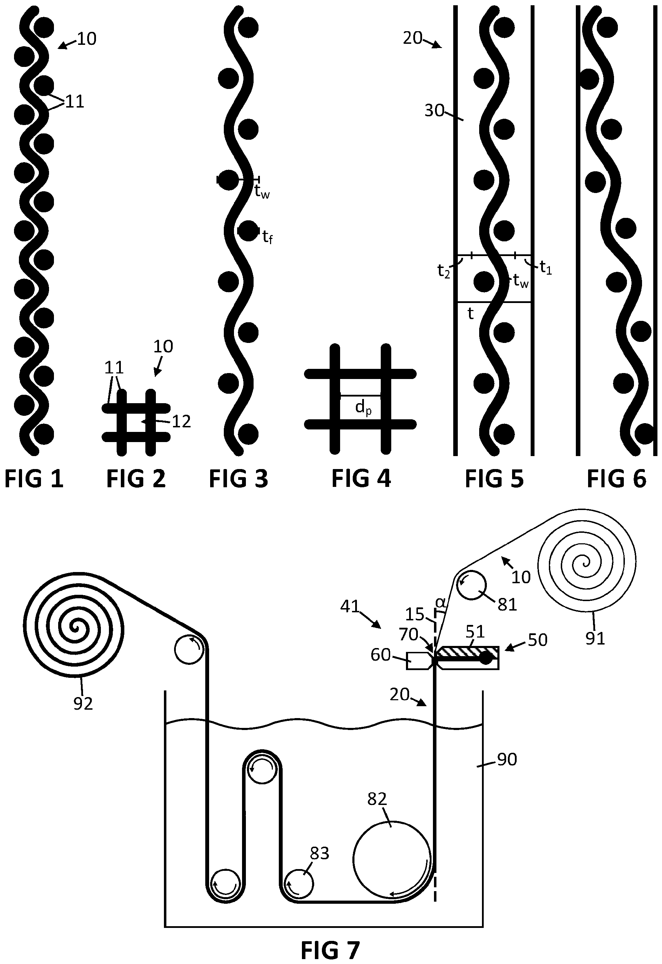

Ion-permeable web-reinforced diaphragms produced as above function well in applications where the current density is low, such as classical (up to 0.2 A/cm²) and advanced (0.2 to 0.6 A/cm²) alkaline water electrolysis. However, intensified electrochemical processes (above 0.6 A/cm²) require or produce higher current densities during their operation, which typically leads to high ionic resistances and consequently high voltage penalties and heat production, in turn resulting in reduced cell efficiencies. Such phenomena are for example seen in alkaline water electrolysis during attempts to increase the electrolysis rates (e.g. to increase the rate of gas production) by letting this technology operate under proton exchange membrane (PEM)-like current densities (e.g. in the order of 0.6-2.5 A/cm²). The latter is for instance evidenced by Kraglund et al. (KRAGLUND, Mikkel Rykær, et al. Ion-solvating membranes as a new approach towards high rate alkaline electrolyzers. Energy & Environmental Science, 2019, 12.11: 3313-3318.). Particularly Fig. 3 therein shows that the cell potential for commercial Zirfon^{™} PERL diaphragms rises rapidly with increasing current density. Consequently, when trying to increase the H₂ generation by raising the current density, one quickly reaches a practical limit for the electrolysis potential (e.g. about 1.8-1.9 V) beyond which the process loses efficiency and economical relevance. Likewise, similar phenomena are seen in other electrochemical cells upon e.g. fast (dis)charging of alkaline and also other (e.g. Li-on) batteries, where the ionic resistance dominates the achievable speed of (dis)charging or cell operation.

It is therefore desirable to produce ion-permeable diaphragms having substantially lower ionic resistance, allowing them to maintain high efficiency also under intensified usage at higher current densities. The main options to achieve this are to make the diaphragms considerably thinner and/or more porous. Nevertheless, this must be balanced with the need to maintain sufficient mechanical strength (cf. supra), so that the web-reinforcing as such should be maintained. Notwithstanding the latter, there is still room to reduce the thickness and/or increase the open area of the porous web.

However, the extent to which this is possible is limited when using the state of the art manufacturing methods for coating the porous web with dope. Indeed, in practice it is difficult to impossible to manufacture decent ion-permeable web-reinforced diaphragms when the open area of the porous web is higher than 60%. In this respect, EP2296825B1 mentions that the elongated porous web may be between 30 and 70%, with an open area in the range of 40 to 60% being particularly preferred. However, the listed examples of suitable fabrics are notably limited to fabrics with an open area between 38 and 58%; conforming well with the value of 60% (cf. supra) found in practice, above which manufacturing good ion-permeable web-reinforced diaphragms becomes exceedingly challenging. Similar issues arise when trying to use porous webs with a thickness significantly below 200 µm.

There is thus still a need in the art for better ways to double-sidedly coat a porous web with a dope.

### Summary of the invention

It is an object of the present invention to provide coating apparatuses for double-sidedly coating a porous web. It is a further object of the present invention to provide methods, uses and products associated therewith. This objective is accomplished by apparatuses, methods, uses and products according to the present invention.

It is an advantage of embodiments of the present invention that both sides of the porous web can be coated with a substantially constant coating thickness. It is a further advantage of embodiments of the present invention that a constant total coating thickness can be realized.

It is an advantage of embodiments of the present invention that the position of one side of the porous web can be very well controlled and maintained. It is a further advantage of embodiments of the present invention that one side can be coated with a fixed coating thickness, while any thickness variations inherent to the porous web can be absorbed at the other side.

It is an advantage of embodiments of the present invention that it is particularly well suited for coating porous webs with a relatively low rigidity-and thus high flexibility-, such as those with a high to very high open area (e.g. above 60%, or above 70% or 80%) and/or thin porous web thickness (e.g. below 150 µm, or below 100 µm).

It is an advantage of embodiments of the present invention that only one slot-die coating head is required. It is a further advantage of embodiments of the present invention that this obviates the need to precisely balance two dope flows against one another, thereby making the coating apparatus easier to operate. It is yet a further advantage of embodiments of the present invention that the coating apparatus is less expensive to build and maintain.

It is an advantage of embodiments of the present invention that ion-permeable web-reinforced diaphragms with a low to very low ionic resistance can be manufactured. It is a further advantage of embodiments of the present invention that such ion-permeable web-reinforced diaphragms are particularly beneficial when used in intensified electrochemical processes (e.g. intensified alkaline water electrolysis, Li-ion batteries, ...)

It is an advantage of embodiments of the present invention that the total coating thickness can be equal to or lower than the slit width.

It is an advantage of embodiments of the present invention that they can be realized in relatively straightforward and economical fashion.

As noted in the background section, the state of the art manufacturing methods for coating a porous web with a dope yield poorly performing ion-permeable web-reinforced diaphragms when the porous web has a high to very high open area (e.g. above 60%, and increasingly so for higher values) or a thin porous web thickness. This can be rationalized by realizing that both a high open area and thin thickness increase the flexibility of the porous web. In this respect, FIG 1 and FIG 2 schematically depict a porous web with a lower open area, as compared to FIG 3 and FIG 4 which depict a porous web with the same filament but a higher open area. As can be seen,-for the same filament type-porous webs with a higher open area are less tightly woven, with a lower number of filaments per unit area, thereby indeed resulting in a lower rigidity-and thus higher flexibility-compared to low open area porous webs. As also seen in FIG 1 and FIG 3, the porous web thickness is typically about twice the filament diameter. The main way to reduce the porous web thickness is therefore to reduce the filament diameter. However, thinner filaments are typically inherently less rigid compared to thicker filaments of the same material. Porous webs made with such thinner filaments are consequently indeed also more flexible.

In systems as described in EP1298740A2 and EP2296825B1, the porous web is transported between the two slot-die coating heads while the points where the porous web contacts a supporting structure (e.g. a roller) are relatively far removed from the slot-die coating heads. The porous web is therefore relatively free to move/displace in the direction between the two slot openings (i.e. perpendicular to the transport direction and parallel to the porous web thickness). As such, rather than coating each side of the porous web with a substantially constant coating thickness (as shown in FIG 5), the total coating thickness may be kept relatively constant but the local coating thickness at each side varies along the coated web length (as shown in FIG 6). These variations in local coating thickness can e.g. lower the bubble-point in the produced ion-permeable web-reinforced diaphragms. Both EP1298740A2 and EP2296825B1 rely to some extent on symmetrically supplying the dope to have a self-centring effect on the porous web, but since the dope can easily penetrate the porous web when the open area thereof is high to very high, this 'self-centring' effect increasingly fails for high to very high open area porous webs. This is also related to the viscosity of the dope and, accordingly, similar issues arise when using thinner, less viscous dopes (e.g. 100 mPa.s or lower). Indeed, such dopes can more easily penetrate the porous web-even when the open area is not particularly high-and thereby exert insufficient pressure on the porous web to produce a significant self-centring effect.

EP2296825B1 further mentions that the distance between the lower slot faces of the impregnating apparatus may be set greater than that between the upper slot faces, so that the smaller gap between the upper slot faces can serve to restrain extreme movement of the elongated porous web and help to centre it. By doing so, it was found that waviness and curl in the produced separator can be reduced. However, while this may suffice to reduce excessive movement/displacement that results in such asymmetry that it causes the ion-permeable web-reinforced diaphragm itself to bend (e.g. wave or curl), it does so insufficiently to thoroughly minimize the more subtle variations that nevertheless cause imperfections in the coating (e.g. negatively impacting the 'bubble-point' of separator). Indeed, such an approach cannot fully centre the porous web, because the porous web itself typically has a certain thickness variation (e.g. 5 to 10%). Setting the gap between the upper slot faces too small therefore obstructs the porous web when it is transported between the impregnating heads, which can cause the porous web to bunch up and in extreme cases even tear or rip and/or congest the impregnating apparatus. However, setting the gap sufficiently wide means that there will always be a minimum of freedom of displacement for the porous web to move.

In view of the above, the present inventor conceived new configurations using which the porous web can be steadied against a web positioning element closely or immediately before being coated. The web positioning element advantageously ensures that one side of the porous web is constantly at the same position, so that at least the coating on that side will have a substantially constant thickness; while any thickness variation of the porous web (cf. supra) is absorbed at the other side through a correspondingly higher or lower coating thickness (without obstructing the downward transport of the porous web). This is advantageous in that the coating on one side of an ion-permeable web-reinforced diaphragm has in practical applications often a dominant effect on the characteristics of the diaphragm as a whole. Ensuring a constant thickness on that side therefore has a positive effect to these characteristics.

Moreover, the new configuration uses only one slot-die coating head, which results in a coating apparatus that is not only easier to operate through not needing to balance the two dope flows against one another, but also less expensive to build and maintain through omitting one slot-die coating head (e.g. reducing the amount of 'scrap') and accompanying peripheral structures (e.g. dope supply) and relaxing the level of control needed over the dope flow.

The present coating apparatus can be configured so that the web positioning element is on either side thereof (i.e. at the side of the slot-die coating head or of the doctor blade); though typically not both, as this could cause obstruction as discussed above. As such, two main configurations (herein respectively referred to as the 'first' and 'second' main configuration) can be used to realize the steadying of the porous web.

In a first aspect, the present invention relates to a coating apparatus for double-sidedly coating a porous web with a dope, comprising: (i) a slot-die coating head comprising an upper lip, a lower lip and a slot between the upper lip and the lower lip, (ii) a doctor blade arranged opposite the lower lip across a reference plane, (iii) a slit defined between the lower lip and the doctor blade for passing a porous web therebetween, the slot opening up towards the slit, and (iv) a web positioning element; wherein the web positioning element is the upper lip of the slot-die coating head, the upper lip protruding up to the reference plane so that there is an offset between the upper lip and the lower lip, or a spacing structure on the doctor blade, the spacing structure protruding up to the reference plane so that there is an offset between the spacing structure and the doctor blade.

In a second aspect, the present invention relates to a method for double-sidedly coating a porous web with a dope using a coating apparatus according to any embodiment of the first aspect, comprising: (a) passing a porous web through the slit while steadying said porous web against the web positioning element, and (b) providing the dope through the slot of the slot-die coating head into the slit, thereby coating a first side of the porous web facing the slot, and coating an opposite second side of the porous web through said porous web.

In a third aspect, the present invention relates to a use of a web positioning element in a coating apparatus according to any embodiment of the first aspect for steadying a porous web thereagainst.

In a fourth aspect, the present invention relates to a double-sidedly coated porous web obtainable by the method according to any embodiment of the second aspect.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG 1 schematically depicts a side view of a low open area porous web.
FIG 2 schematically depicts a front view of the motive of a low open area porous web in accordance with FIG 1.
FIG 3 schematically depicts a side view of a high open area porous web.
FIG 4 schematically depicts a front view of the motive of a high open area porous web in accordance with FIG 3.
FIG 5 schematically depicts a double-sidedly coated porous web having an ideally constant coating thickness on both sides.
FIG 6 schematically depicts a double-sidedly coated porous web having coating thickness which along the length of each sides, as is typically obtained using prior art methods.
FIG 7 schematically depicts a roll-to-roll setup for forming a double-sidedly coated porous web in accordance with the present invention.
FIG 8 schematically depicts a close-up view of a first type of coating apparatus ('first main configuration') in accordance with the present invention, in which the web positioning element is provided by a protruding upper lip of the slot-die coating head.
FIG 9 schematically depicts a close-up view of a second type of coating apparatus ('second main configuration') in accordance with the present invention, in which the web positioning element is provided by a protruding spacing structure on the doctor blade.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

The following terms are provided solely to aid in the understanding of the invention.

As used herein, and unless otherwise specified, a porous web-when fully outspread (e.g. not curved, rolled or bunched up)-typically has three perpendicular dimensions of which one-referred to as the 'thickness'-is considerably smaller than the other two. Of the remaining two dimensions, the direction parallel to the transportation direction through the slit is herein referred to as the 'length' of the porous web. The third direction is then referred to as the 'width' of the porous web.

As used herein, and unless otherwise specified, the 'open area' of a porous web is the fraction of the porous area (i.e. the combined area of the pores) to the total area of the porous web. For example, on a view such as depicted in FIG 2 and FIG 4, the open area is the area of open space/pores (12; white) between the filaments (11; black) over the total area (white+black). The open area of a porous web can be determined experimentally for instance by taking a microscopic image of the porous web akin to the schematic views shown in FIG 2 and FIG 4 and determining therefrom-e.g. for a selected (unit) area-the area of open space/pores and the total area.

In a first aspect, the present invention relates to a coating apparatus for double-sidedly coating a porous web with a dope, comprising: (i) a slot-die coating head comprising an upper lip, a lower lip and a slot between the upper lip and the lower lip, (ii) a doctor blade arranged opposite the lower lip across a reference plane, (iii) a slit defined between the lower lip and the doctor blade for passing a porous web therebetween, the slot opening up towards the slit, and (iv) a web positioning element; wherein the web positioning element is the upper lip of the slot-die coating head (herein referred also to as the 'first main configuration'), the upper lip protruding up to the reference plane so that there is an offset between the upper lip and the lower lip, or a spacing structure on the doctor blade (herein referred also to as the 'second main configuration'), the spacing structure protruding up to the reference plane so that there is an offset between the spacing structure and the doctor blade.

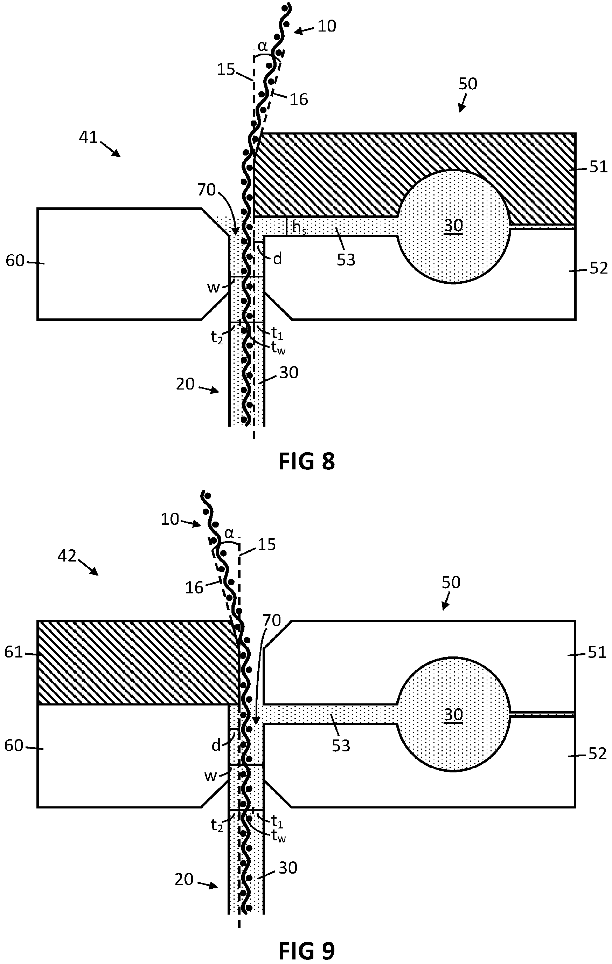

An illustrative coating apparatus 41 in accordance with the first main configuration is schematically depicted in FIG 8, showing slot-die coating head 50-with upper lip 51, lower lip 52 and slot 53-and doctor blade 60 arranged opposite lower lip 52 across reference plane 15. Slit 70 is defined between lower lip 52 and doctor blade 60, for passing porous web 10 therebetween. Slot 53 opens up towards slit 70, so dope 30 from slot-die coating head 50 can be provided through slot 53 into slit 70. In FIG 8, the web positioning element is realized by upper lip 51, which protrudes up to reference plane 15 so as to create an offset d with lower lip 52. The first main configuration may be preferred over the second, e.g. because the upper lip doubles up as the web-positioning element, thereby requiring less elements.

Conversely, an illustrative coating apparatus 42 in accordance with the second main configuration is schematically depicted in FIG 9. Coating apparatus 42 is similar to coating apparatus 41, but the web positioning element is realized by spacing structure 61 on the doctor blade-i.e. opposite upper lip 51-, which in turn protrudes up to reference plane 15 so as to create an offset d with doctor blade 60.

In embodiments, only one of the protruding upper lip or protruding spacing structure may be present. In other words, the web positioning element may be present on one side only.

In embodiments, the coating apparatus-or a system comprising the coating apparatus-may comprise one or more guiding elements (e.g. one or more rollers, such as spreader rollers) for guiding the porous web as it is transported (e.g. through the slit). In embodiments, one or more of the guiding elements may contribute to-or even drive-the transportation of the porous web. In embodiments, the coating apparatus may comprise at least a guiding element before (e.g. above) the web positioning element. In alternative or complementary embodiments, the coating apparatus may comprise at least a guiding element after (e.g. below) the slot-die coating head's lower lip. In preferred embodiments, the coating apparatus may comprise the (first) guiding element before the web positioning element and the (second) guiding element after the slot-die coating head's lower lip.

In preferred embodiments, one or more of the guiding elements may be spreader roller(s) for spreading the porous web. In embodiments, spreading the porous web may comprise spreading the porous web at least in the porous web's width direction, preferably in both the porous web's width and length directions. Spreading the porous web may be (fully) outspreading the porous web; preferably without substantially (over)stretching it (i.e. forcibly extending or elongating it).

As described in more detail below,-in operation-the porous web may come into contact with the web positioning element along an incidence plane and the incidence plane may be-with respect to the reference plane-tilted towards the web positioning element. In embodiments, the incidence plane may be tilted at an angle (α) of at least 5°, preferably at least 10°, more preferably at least 15°, yet more preferably at least 20°, most preferably at least 25°. In embodiments, the coating apparatus-e.g. more particularly the web positioning element-may be configured therefor. For example, the web positioning element (e.g. a position thereof) may be configured with respect to a first/upper guiding element (i.e. before the web positioning element) such that the porous web comes into contact with the web positioning element along the tilted incidence plane.

In embodiments, the offset may measure between 1 µm and 1000 µm, preferably between 2 µm and 500 µm, more preferably between 3 µm and 250 µm, yet more preferably between 4 µm and 125 µm, such as between 5 µm and 50 µm. In embodiments, the offset may be adjustable (e.g. settable in a controlled manner to a selected/predetermined value). A coating apparatus with an adjustable offset can advantageously be straightforwardly adapted to accommodate porous webs with varying thicknesses.

In embodiments, the spacing structure may be affixed to or integrally connected with the doctor blade.

In embodiments, the slot-die coating head may be physically coupled with the doctor blade. Doing so can advantageously aid to keep the offset constant during the coating process. Note that the offset can nevertheless be adjustable (cf. surpa); i.e. the slot-die coating head may be physically coupled with the doctor blade in such a way that the offset can be adjusted (when this is desired). In some embodiments, the slot-die coating head may be directly connected with the doctor blade. For example, the slot-die coating head may be affixed to or integrally connected with the doctor blade. In other embodiments, the the slot-die coating head may be indirectly coupled with the doctor blade through another element. For example, the slot-die coating head and the doctor blade may each be affixed to or integrally connected with a common base.

In embodiments, any feature of any embodiment of the first aspect may independently be as correspondingly described for any embodiment of any of the other aspects.

In a second aspect, the present invention relates to a method for double-sidedly coating a porous web with a dope using a coating apparatus according to any embodiment of the first aspect, comprising: (a) passing a porous web through the slit while steadying said porous web against the web positioning element, and (b) providing the dope through the slot of the slot-die coating head into the slit, thereby coating a first side of the porous web facing the slot, and coating an opposite second side of the porous web through said porous web.

In embodiments, steadying the porous web against the web positioning element may comprise drawing the porous web against the web positioning element. For example, the porous web may be drawn flat against the web positioning element. Steadying-and drawing-the porous web against the web positioning element may typically be achieved by suitably configuring the web positioning element (e.g. a position thereof) with respect to the porous web. For example, the coating apparatus may comprise a first guiding element (e.g. a first roller, such as a first spreader roller; cf. supra) positioned before the web positioning element and a second guiding element (e.g. a second roller, such as a second spreader roller) positioned after the slit; and the web positioning element may be shifted with respect to the shortest path for the porous web between the first and second guiding element, such that the porous web is drawn against the web positioning element.

This is for example schematically depicted for an illustrative roll-to-roll process in FIG 7, showing a porous web 10 rolling off first roll 91 over a small spreader roller 81, through coating apparatus 41; and then after coating-through non-solvent bath 90, in order to solidify the dope into the eventual coating-over large (spreader) roller 82 and then a series of further rollers 83 rolled onto second roll 92. As depicted, the coating apparatus 41 is here shifted to the right (i.e. with respect to the shortest path for the porous web 10 between the rollers 81 and 82), so that the porous web 10 running between (spreader) rollers 81 and 82 is drawn against the web positioning element 51. More specifically, the depicted shift is such that the horizontal distance between (the left side of) the web positioning element-and thus the reference plane 15-and (the right side of) the large roller 82 is about equal to the sum (t_{w} + t₂) of the porous web thickness (t_{w}) and the (dry) coating thickness on the second side (t₂); so that the porous web 10 runs substantially vertically downward from the web positioning element 51 to the large roller 82.

In embodiments, the porous web may thus come into contact with the web positioning element along an incidence plane (i.e. 'plane of incidence') and the incidence plane may be-with respect to the reference plane-tilted towards the web positioning element. In embodiments, the incidence plane may be tilted (i.e. towards the web positioning element) at an angle (α) of at least 5°, preferably at least 10°, more preferably at least 15°, yet more preferably at least 20°, most preferably at least 25°. A tilted incidence plane advantageously facilitates steadying the porous web against the web positioning element.

By steadying the porous web against the web positioning element, the position of the first side of the porous web at the height of the web positioning element is aligned with the reference plane. From there, the porous web can be transported downward while keeping the first side of the porous web substantially steady. Preferably, said transportation may be parallel with the reference plane, so that the porous web's first side remains aligned with said reference plane. In embodiments, the porous web may be passed through the slit substantially vertically downward. This can for example be realized through accordingly configuring the web positioning element with respect to a lowerly positioned guiding element (e.g. as shown in FIG 7 for web positioning element 51 and roller 82; cf. supra). Accordingly, the reference plane may likewise be oriented substantially vertically downward; or-in other words-a normal of the reference plan may be oriented substantially horizontally.

Moreover, due to how the web positioning element, lower lip and doctor blade are configured with respect to one another, the slit-where the coating occurs-automatically closely follows the web positioning element. For example, a height distance between a bottom of the web positioning element and a top of the slit may be smaller than 150% of the slot height (hₛ), preferably smaller than 120%, more preferably smaller than 110%, still more preferably equal to or smaller than 105%, most preferably equal to or smaller than 100%. A typical slot height may for example be in order of about 0.1 to 5 mm, such as 0.2 to 2 mm. By advantageously coating the web positioning element close to where has been steadied, there is minimal opportunity for the porous web to intermediately still deviate from its desired ideal path; in contrast e.g. to EP1298740A2 and EP2296825B1, any opportunity for the porous web to deviate from its desired ideal path is likewise reduced.

In embodiments, the porous web-which could alternatively be referred to as a 'porous support'-may be a woven or non-woven fabric, preferably a woven fabric. Compared to what is currently achievable for woven fabrics, non-woven fabrics tend to be thicker and typically have lower open areas and give less mechanical strength and/or support; making them less preferred. In embodiments, the porous web may be made of monofilaments, multifilaments or a combination thereof; preferably monofilaments. Monofilament porous webs advantageously tend to be mechanically stronger and stiffer.

In embodiments, the porous web may have an open area of between 55 and 95%, preferably more than 60%, more preferably more than 70%, yet more preferably more than 80%, most preferably more than 90%.

In embodiments, the porous web may have a thickness (t_{w}) of between 10 and 750 µm, preferably between 35 and 500 µm, more preferably between 50 and 150 µm.

In embodiments, the porous web may have a filament thickness (t_{f})-e.g. filament diameter-of between 5 and 400 µm, preferably between 10 and 300 µm, more preferably between 20 and 250 µm, yet more preferably between 30 and 200 µm. The filaments from which the porous web is formed may typically have a spherical cross-section, so that one may typically speak of the 'filament diameter'. However, where the filaments have a different cross-sectional profile (e.g. oval, octagonal, hexagonal, pentagonal, square, rectangular or triangular), it can be more appropriate to speak of the 'filament thickness'.

In embodiments, a thickness of the double-sidedly coated porous web (t) may measure between 15 µm and 1750 µm, preferably between 30 µm and 1000 µm, more preferably between 60 µm and 600 µm, more preferably between 65 and 150 µm. With reference to FIG 8 and FIG 9, the thickness of the double-sidedly coated porous web (i.e. the total coating thickness) in the present invention is typically defined by the slit width (w). Here, a distinction can be made between the 'wet thickness'-i.e. measured shortly below the slit, when the dope is still wet-and the 'dry thickness'-i.e. measured after fully solidifying the dope, e.g. by removing the solvent therefrom. Solidifying the dope may have a (slight) shrinking effect on the coating, so that the dry thickness may be (slightly) smaller than the wet thickness.

In preferred embodiments, the wet thickness of the double-sidedly coated porous web may be substantially equal to the slit width. This approach advantageously allows to have a very well controlled total coating thickness that is known with high accuracy. However, it is also possible to control the flow of dope through the slot such that the coated dope forms a meniscus under the slit as described in EP2296825B1 (cf. supra). Such an approach advantageously allows to have a lower total coating thickness than the slit width, however any variation in the dope flow may then negatively affect the uniformity of the coating thickness.

In contrast e.g. to EP1298740A2 and EP2296825B1, only a single slot-die coating head is herein generally needed, which delivers dope through the slot on one side of the slit. Use is then made of the porosity of the porous web (i.e. the open area of the porous web) to send a portion of the dope-through the pores-to the other side, thereby nevertheless allowing to coat both sides of the porous web.

Although the coated dope penetrates through the porous web-so that the latter is impregnated therewith and the coating is thus present along the full total coating thickness-, it is nevertheless useful to define a coating thickness on either side of the coated porous web (t₁ and t₂) as the thickness extending beyond the porous web thickness (t_{w}); as e.g. shown in FIG 5, so that the total coating thickness t is equal to the sum of the t₁, t₂ and t_{w}. In this respect,-as defined above-the porous web typically has a first side which faces the slot and an opposite second side which faces away from the slot (i.e. facing the doctor blade). However, it is instructive to consider also the first and second side in view of their orientation regarding the web positioning element. More specifically, the first side faces the web positioning element in embodiments wherein the web positioning element is the upper lip; conversely, the second side faces the web positioning element in embodiments wherein the web positioning element is the spacing structure. Regardless then of the type of embodiment, by steadying the porous web against the web positioning element, the coating thickness on the side facing the web positioning element (i.e. t₁ or t₂) is then defined by the offset (d); said offset being with respect to the lower lip or doctor blade, depending on the type of embodiment (cf. supra). Any variation in the porous web thickness t_{w} is then absorbed at the side facing away from the web positioning element (cf. supra). In some embodiments, a coating thickness on the first side may therefore differ from a coating thickness on the second side. In other embodiments, the coating thickness on the first side may be substantially equal to the coating thickness on the second side.

Like the total coating thickness then, the wet coating thickness on the side facing the web positioning element may in preferred embodiments be substantially equal to said offset. This approach again advantageously allows to have a very well controlled coating thickness on the web positioning element-facing side that is known with high accuracy. This side can then for example be used as the (main) separation side in an ion-permeable web-reinforced diaphragm, thereby assuring good, constant and uniform separation characteristics (e.g. bubble-point). The aforementioned notwithstanding, it is again also possible to control the flow of dope through the slot such that the coated dope forms a meniscus under the slit as described in EP2296825B1 (cf. supra). Such an approach advantageously allows to have a lower coating thickness on the web positioning element-facing side than the offset, however any variation in the dope flow may then negatively affect the uniformity of the coating on the on the web positioning element-facing side.

In embodiments, a coating thickness on the side facing the web positioning element and/or on the side facing away from the web positioning element may measure between 1 µm and 1000 µm, preferably between 2 µm and 500 µm, more preferably between 3 µm and 250 µm, yet more preferably between 4 µm and 125 µm, such as between 5 µm and 50 µm.

In embodiments, the porous web may have a pore size (dₚ)-also referred to as 'mesh opening'-measuring between 50 and 2000 µm, preferably between 100 and 1250 µm, more preferably between 150 and 1000 µm, yet more preferably between 200 and 750 µm.

In embodiments, the porous web may be made of a material selected from the list of: polypropylene (PP), polyester (PET), polyamide (PA), polyethersulphone (PES), polyethylene (PE), polyoxymethylene (POM), polyetheretherketone (PEEK), polyphenylene sulfide (PPS), polymonochlorotrifluoroethylene (CTFE), copolymers of ethylene, chlorotrifluoroethylene (ECTFE), copolymers of ethylene and tetrafluoroethylene (ETFE), polytetrafluoroethylene (PTFE), and copolymers thereof.

Examples of some suitable commercial porous webs and their characteristics are listed in the following table:

| | |
|---|---|
| Sefar Peektex 17-240/62 | A PEEK mesh with a plain weaving texture based on PEEK monofilaments with a diameter of 65 µm, having a mesh opening of 240 µm an open area of 62% and a thickness of 115 µm; supplied by Sefar AG, 9410 Heiden, Switzerland |
| Sefar Peektex 17-195/70 | A PEEK mesh with a plain weaving texture based on PEEK monofilaments with a diameter of 30 µm, having a mesh opening 195 µm an open area of 70% and a thickness of 55 µm; supplied by Sefar AG, 9410 Heiden, Switzerland |
| PP 1044/71 (experimental) | A PP mesh with a plain weaving texture based on PP monofilaments with a diameter of 220 µm, having a mesh opening of 1044 µm an open area of 71% and a thickness of 420 µm; custom-made |
| PVF PPS 485/58 PW | A PPS mesh with a plain weaving texture based on PPS monofilaments with a diameter of 150 µm, having a mesh opening of 485 µm an open area of 58% and a thickness of 318 µm; supplied by PVF Industrial Mesh, 85570 Markt-Schwaben, Germany |

In embodiments, the dope may further comprises a (polymeric) binder. In embodiments, the dope may comprise a single polymer or a blend of two or more polymers.In embodiments, the one or more polymers may be homo- and/or copolymers (e.g. graft copolymers, block copolymers and/or random copolymers). In embodiments, one or more homopolymers may be independently selected from the list of: polysulfone (PSU), polyethersulfone (PESU), polyarylethersulfone, polyphenylsulfone (PPSU), polyvinylidene fluoride (PVDF), polyvinylidene chloride (PVDC), polyvinyl chloride (PVC), chlorinated polyvinyl chloride (CPVC), polyaryletherketone (PAEK), polyether ether ketone (PEEK), polyethylene oxide (PEO), sulfonated polyether ether ketone (PEEK-WC), sulfonated PPS (SPPS or PPSS), polymonochlorotrifluoroethylene (PCTFE), polyetherimide (PEI), polyimide (PI), polyamide-imide (PAI), polyacrylonitrile (PAN), polycarbonate (PC), polymethyl methacrylate (PMMA), polyurethane (PUR), polyphenylene sulphide (PPS), cellulose acetate (CA), polystyrene (PS), polyvinyl alcohol (PVA), polyvinyl acetate (PVAc), a polyamide (e.g. nylon, such as nylon 6 or nylon 66), polybenzimidazole (PBI), ethylene propylene diene monomer (EPDM), silicone rubber, poly[1-(trimethylsilyl)-1-propyne] (PTMSP) and poly(4-methyl-2-pentyne) (PMP). In embodiments, one or more copolymers may be independently selected from the list of: poly(vinylidene fluoride-co-hexafluoropropylene) (PVDF-HFP) and poly(vinylidene fluoride-co-chlorotrifluoroethylene) (PVDF-CTFE).

In embodiments, the dope may further comprises a solvent. In embodiments, the solvent may be selected from the list of: dimethyl sulfoxide (DMSO), N-ethyl-2-pyrrolidone (NEP), N-methyl-2-pyrrolidone (NMP), dimethylacetamide (DMAc), dimethylformamide (DMF), tetrahydrofuran (THF), 1,4-dioxane, triethyl phosphate (TEP), tetramethyl urea (TMU), tetra oxaundecane (TOU), Astrobio^{™}, Sta-Sol^{®} dimethyl ester based solvent blends, cyrene and TamiSolve NxG.

In embodiments, the dope may comprise one or more additives for aiding in forming a solution, dispersion or suspension. In embodiments, such additives may be organic and/or inorganic in nature. In embodiments, one or more organic additives may be selected from the list of: hydroxypropyl cellulose (HPC), carboxymethylcellulose (CMC), polyvinylpyrrolidone (PVP), polyethylene glycol (PEG), ethanolamine (MEA), diethanolamine (DEA), glycerol, glycol or water. In embodiments, one or more inorganic additives may be selected from the list of: fine granular inorganic oxides (e.g. MgO, TiO₂, HfO₂, Al₂O₃, ZrO₂, Y₂O₃, SiO₂ or MgO) or their hydroxy-oxide derivatives, zeolites, Zr₃(PO₄)₄, BaSO₄, BaTiO₄, SiC, metal-organic frameworks (MOF), molecular sieves, ion-exchangers and metal hydrides. These additives can be used in a variety of shapes; e.g. as a powder, whiskers, fibres, chopped fibres, etc.

In embodiments, the polymer(s) and/or additive(s) may be functionalized. For example, they may be aminated, sulfonated, acrylated or functionalized with a quaternary ammonium group.

In embodiments, the dope at the impregnation temperature may have a viscosity at a shear rate of 1 s⁻¹ of from 1 to 500 mPa.s, preferably from 5 to 300 mPa.s, more preferably from 10 to 200 mPa.s, yet more preferably from 15 to 100 mPa.s.

In embodiments, the method may comprise a further step c-after step b of providing the dope into the slit, thereby double-sidedly coating the porous web-of solidifying the dope. In embodiments, solidifying the dope may be performed by phase inversion (which may also be referred to as 'phase separation'). In embodiments, the phase inversion may be achieved by contacting the dope with a non-solvent-such as (warm) water; for example by passing it through a non-solvent precipitation bath-or by any other known means of achieving phase inversion. In preferred embodiments, the phase inversion may be achieved by passing the dope through a non-solvent precipitation bath, without first contacting the dope with a non-solvent (e.g. water) vapour phase. In other embodiments, the phase inversion may comprise contacting the dope with a non-solvent (e.g. water) vapour phase. Use of a non-solvent vapour phase (as e.g. described in EP1776490B1) typically makes for a more involved and complicated phase inversion, while this is typically not needed within the present invention.

Preferably, step c may be performed relatively quickly after step b, such that the dope is quickly solidified after being coated on the porous web and thereby limiting flow of the dope with respect to porous web after being coated thereon. The specifics thereof will typically depend on the transportation speed of the porous web, but a height distance between a bottom of the slit and a top of the non-solvent in the precipitation bath (i.e. the 'air-gap') may for example be equal to 25 cm or less, preferably 10 cm or less, more preferably 5 cm or less, yet more preferably 2 cm or less, or even 0 cm. In principle, after step b (i.e. after being coated with the dope) and before step c (i.e. before solidifying said dope) the porous web can still move/displace in the wet dope layer. As such, the double-sidedly coated porous web may preferably be passed from the slit into the non-solvent precipitation bath substantially vertically downward. As with the vertical orientation in the slit, this can for example be realized through accordingly configuring the web positioning element with respect to a lowerly positioned guiding element placed in the non-solvent precipitation bath (e.g. as shown in FIG 7 for web positioning element 51 and roller 82; cf. supra). By keeping the coated porous web vertical until the dope is solidified, it can advantageously be avoided that the dope is (gravitationally) drawn to one of the sides.

In embodiments, the method may be implemented as a roll-to-roll (which may also be referred to as a 'coil-to-coil') process. In embodiments, the roll-to-roll process may be a continuous or semi-continuous process.

In embodiments, the method may be for manufacturing an ion-permeable web-reinforced diaphragm. In embodiments, the ion-permeable web-reinforced diaphragm may be for use in intensified electrochemical cells (e.g. alkaline water electrolysis or Li-ion battery). The electrochemical cell may for example comprise an operational window in the range of from 0.6 to 2.5 A/cm². As also noted in the background section, different electrochemical process regimes can be distinguished based on current density: 'classical' (up to 0.2 A/cm²), 'advanced' (0.2 up to 0.6 A/cm²) and 'intensified' (0.6 A/cm² and above, e.g. 0.6-2.5 A/cm²). Although double-sidedly coated porous webs in accordance with the present invention can be used for any of these current densities regimes-and indeed for other altogether applications-they are especially advantageous use in intensified electrochemical cell, where good alternatives are currently lacking.

In embodiments, any feature of any embodiment of the second aspect may independently be as correspondingly described for any embodiment of any of the other aspects.

In a third aspect, the present invention relates to a use of a web positioning element in a coating apparatus according to any embodiment of the first aspect for steadying a porous web thereagainst.

In embodiments, any feature of any embodiment of the third aspect may independently be as correspondingly described for any embodiment of any of the other aspects.

In a fourth aspect, the present invention relates to a double-sidedly coated porous web obtainable by the method according to any embodiment of the second aspect.

In embodiments, any feature of any embodiment of the fourth aspect may independently be as correspondingly described for any embodiment of any of the other aspects.

The invention will now be described by a detailed description of several embodiments of the invention. It is clear that other embodiments of the invention can be configured according to the knowledge of the person skilled in the art without departing from the true technical teaching of the invention, the invention being limited only by the terms of the appended claims.

### Examples

To validate that a considerable improvement with respect to the prior art can indeed be realized, ion-permeable web-reinforced diaphragm were manufactured by coating three different types of porous web with a dope (comprising polysulfone binder and a ZrO₂ filler) in accordance with the present invention (example 1-3) and benchmarked with a commercial Zirfon^{™} PERL (UTP 500) ion-permeable web-reinforced diaphragm in accordance with EP1776490B1 (comparative example). With respect to the comparative example, Example 1 started from a thicker porous web (420 µm vs 320 µm)-but having a considerably larger open area (71% vs 58%)-and was coated such as to realize a similar diaphragm thickness (i.e. 'dry thickness') as the comparative example (510 µm vs 525 µm). Example 2 used a porous web with a considerably lower thickness (115 µm) but smaller open area (62%; i.e. closer to that of the comparative example) to realize a diaphragm thickness that is more than four times smaller (123 µm). Example 3 used an even thinner porous web (55 µm) with again a high open area (70%) to realize the thinnest diaphragm thickness (69 µm) of these examples.

For each of the examples, the ionic resistance was measured in a 30 wt% aqueous KOH solution at 30 °C. Both the absolute and relative (with respect to the benchmark comparative example) ionic resistance values were determined. The results are summarized in the table below.

| Example | Porous web | | | Realised diaphragm | | |
|---|---|---|---|---|---|---|
| | Type | Thickness | Open area | Thickness | Ionic resistance | |
| | | (µm) | (%) | (µm) | (Ω.cm²) | (%) |
| comparative | PVF PPS 485/58 PW | 320 | 58 | 525 | 0,151 | 100 |
| 1 | Experimental PP 1044/71 | 420 | 71 | 510 | 0,105 | 69,5 |
| 2 | SEFAR PEEKTEX 17-240/62 | 115 | 62 | 123 | 0,029 | 19,2 |
| 3 | SEFAR PEEKTEX 17-195/70 | 55 | 70 | 69 | 0,015 | 9,9 |

Thus, although example 1 started from a thicker porous web, the ionic resistance was more than 30% lower than for the comparative example. Moreover, example 2 and 3 yielded an ionic resistance that was respectively more than 5 times and more than 10 times lower than the benchmark. Such a reduced ionic resistance is beneficial because it drastically reduces the voltage drop across the diaphragm and improves the overall efficiency while reducing the associated resistive heating.

Note that the comparative example could also be repeated using the apparatus and method in accordance with the present invention. For an equal diaphragm thickness, a same or moderately lower ionic resistance can be expected. After all, such relatively thick and low open area porous webs are themselves typically sufficiently stiff to resist excessive warping between the slot-die coating heads. The relative advantage from the present invention is therefore lower. However, repeating examples 1-3 using the approach of EP1776490B1 does not allow to make comparable diaphragms (i.e. reaching the same low ionic resistance).

Following a similar procedure as for examples 1-3, an ion-permeable web-reinforced diaphragm for e.g. a Li-ion battery can for instance be fabricated by coating a thin (e.g. 15-20 µm) polyester porous web with a dope comprising a PVDF binder and a ZrO₂ or Al₂O₃ filler.

It is to be understood that although preferred embodiments, specific constructions, configurations and materials have been discussed herein in order to illustrate the present invention. It will be apparent to those skilled in the art that various changes or modifications in form and detail may be made without departing from the scope of the invention as defined in the appended claims.

## Claims

1. A coating apparatus (41, 42) for double-sidedly coating a porous web (10) with a dope (30), comprising:
i. a slot-die coating head (50) comprising
- an upper lip (51),
- a lower lip (52) and
- a slot (53) between the upper lip (51) and the lower lip (52),
ii. a doctor blade (60) arranged opposite the lower lip (52) across a reference plane (15),
iii. a slit (70) defined between the lower lip (52) and the doctor blade (60) for passing a porous web (10) therebetween, the slot (53) opening up towards the slit (70), and
iv. a web positioning element (51, 61);
wherein the web positioning element (51, 61) is
- the upper lip (51) of the slot-die coating head (50), the upper lip (51) protruding up to the reference plane (15) so that there is an offset (d) between the upper lip (51) and the lower lip (52), or
- a spacing structure (61) on the doctor blade (60), the spacing structure (61) protruding up to the reference plane (15) so that there is an offset (d) between the spacing structure (61) and the doctor blade (60).

2. The coating apparatus (41, 42) according to claim 1, wherein-in operation-the porous web (10) comes into contact with the web positioning element (51, 61) along an incidence plane (16) and the incidence plane (16) is-with respect to the reference plane (15)-tilted towards the web positioning element (51, 61) at an angle (α) of at least 15°, preferably at least 20°, more preferably at least 25°.

3. The coating apparatus (41, 42) according to any of the previous claims, comprising one or more spreader rollers (81, 82) for spreading the porous web (10).

4. The coating apparatus (41, 42) according to any of the previous claims, wherein the spacing structure (61) is affixed to or integrally connected with the doctor blade (60).

5. A method for double-sidedly coating a porous web (10) with a dope (30) using a coating apparatus (41, 42) as defined in any of claims 1 to 4, comprising:
a. passing a porous web (10) through the slit (70) while steadying said porous web (10) against the web positioning element (51, 61), and
b. providing the dope (30) through the slot (53) of the slot-die coating head (50) into the slit (70), thereby
- coating a first side of the porous web (10) facing the slot (53), and
- coating an opposite second side of the porous web (10) through said porous web (10).

6. The method according to claim 5, wherein steadying the porous web (10) against the web positioning element (51, 61) comprises drawing the porous web (10) against the web positioning element (51, 61).

7. The method according to claim 5 or 6, wherein the porous web (10) comes into contact with the web positioning element (51, 61) along an incidence plane (16) and wherein the incidence plane (16) is-with respect to the reference plane (15)-tilted towards the web positioning element (51, 61).

8. The method according to claim 7, wherein the incidence plane (16) is tilted at an angle (α) of at least 15°, preferably at least 20°, more preferably at least 25°.

9. The method according to any of claims 5 to 8, wherein the porous web (10) is passed through the slit (70) substantially vertically downward.

10. The method according to any of claims 5 to 9, wherein the porous web (10) has an open area of between 55 and 95%, preferably more than 70%.

11. The method according to any of claims 5 to 10, wherein the porous web (10) has a thickness (t_{w}) of between 20 and 750 µm, preferably between 35 and 500 µm, more preferably between 50 and 150 µm.

12. The method according to any of claims 5 to 11, wherein a coating thickness on the first side (ti) differs from a coating thickness on the second side (t₂).

13. The method according to any of claims 5 to 12, for manufacturing an ion-permeable web-reinforced diaphragm for use in intensified electrochemical cells.

14. Use of an web positioning element (51, 61) in a coating apparatus (41, 42) as defined in any of claims 1 to 4 for steadying a porous web (10) thereagainst.

15. A double-sidedly coated porous web (10) obtainable by the method according to any of claims 5 to 13.
